# EUROPÄISCHE PATENTANMELDUNG

(11) **EP 3 418 750 A1**
(43) Veröffentlichungstag der Anmeldung: **26.12.2018**
(21) Anmeldenummer: 17177379.9
(22) Anmeldetag: 22.06.2017
(51) Int. Cl.: G01N 35/10, B01L 3/02, G01F 17/00

(54) **ERMITTLUNG VON FÜLLSTÄNDEN IN GEFÄSSEN**

(71) Anmelder: Siemens Healthcare Diagnostics Products GmbH, 35041 Marburg (DE)
(72) Erfinder: Guenther, Thomas, 35510 Butzbach (DE)

(57) **Zusammenfassung**

Die Erfindung betrifft ein Verfahren zur Ermittlung von Füllständen einer Flüssigkeit in einem Flüssigkeitsgefäß eines Flüssigkeitsgefäßtyps in Abhängigkeit von Volumina der Flüssigkeit in dem Flüssigkeitsgefäß.

## Beschreibung

Die Erfindung liegt auf dem Gebiet der automatischen in vitro-Diagnostiksysteme. Der Gegenstand der Erfindung umfasst ein Verfahren zur Ermittlung von Füllständen einer Flüssigkeit in einem Flüssigkeitsgefäß eines Flüssigkeitsgefäßtyps in Abhängigkeit von Volumen der Flüssigkeit in dem Flüssigkeitsgefäß.

Zahlreiche Nachweis- und Analyseverfahren zur Bestimmung physiologischer Parameter in Körperflüssigkeitsproben oder anderen biologischen Proben werden heute automatisiert in großer Anzahl in automatischen Analysegeräten, auch so genannten in vitro-Diagnostiksystemen, durchgeführt.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

Automatisch arbeitende Analysatoren, die zur Untersuchung von biologischen Körperflüssigkeiten eingesetzt werden, umfassen verschiedene Gerätebaugruppen zum Prozessieren der Probe. Beispielsweise werden die benötigten Reagenzien mittels einer Pipettiervorrichtung mit einer Pipettiernadel in eine Messküvette eingefüllt. Die Pipettiervorrichtung wird dabei mittels eines Riemenantriebs automatisch verfahren, der Teil einer Roboterstation ist. Aus einem Flüssigkeitsgefäß wird mit einer weiteren Pipettiervorrichtung mit einer Pipettiernadel eine Probenflüssigkeit, z.B. Blut eines Patienten, entnommen und in die Messküvette abgegeben.
Die Messküvette wird mit einer Transportvorrichtung, die z.B. einen Küvettengreifer umfasst, innerhalb des automatischen Analysegerätes zu verschiedenen Positionen ebenfalls mittels eines Riemenantriebs automatisch verfahren. Nach der Messung wird die benutzte Messküvette z.B. zur Entsorgung durch einen Abfallschacht in einen Abfallbehälter verbracht.

Bei der Entnahme von Probenflüssigkeit oder Reagenzien taucht die Pipettiernadel der Pipettiervorrichtung in die jeweilige Flüssigkeit ein, damit diese mittels der Pipettiernadel eingesaugt werden kann. Dabei ist es vorteilhaft, dass die Pipettiernadel möglichst nur soweit eintaucht wie nötig, um das entsprechende Volumen der Flüssigkeit einsaugen zu können. Dadurch können Verunreinigungen und Verschleppungen verringert und die Zuverlässigkeit der Untersuchungsergebnisse erhöht werden.

Bei bekannten automatischen Analysegeräten kommen verschiedene Flüssigkeitsgefäßtypen zum Einsatz, für die jeweils vorab bei der Entwicklung des Analysegeräts Tabellen mit Füllständen und entsprechenden Eintauchtiefen der Pipettiernadeln bei der Pipettierung in Abhängigkeit des zu pipettierenden Flüssigkeitsvolumens händisch ermittelt bzw. festgelegt werden.

Dies hat den Nachteil, dass lediglich einige wenige fest vorgegebene Flüssigkeitsgefäßtypen auf den Analysatoren eingesetzt werden können. Andere, z.B. neu auf den Markt kommende Flüssigkeitsgefäßtypen mit beispielsweise vorteilhaften optischen, mechanischen oder anderen technischen Eigenschaften können mit älteren Analysatoren nicht verwendet werden oder erfordern sehr umfangreiche und aufwändige manuelle Änderungen der entsprechenden Konfiguration des Analysegeräts, da bisher keine automatisierte Ermittlung von entsprechenden Füllständen einer Flüssigkeit in einem Flüssigkeitsgefäß mittels eines automatischen Analysegeräts vorgesehen war. Eine solche automatisierte Ermittlung würde es ermöglichen, neue und/oder bisher nicht für die Verwendung vorgesehene Flüssigkeitsgefäßtypen auf einem Analysegerät einsetzten zu können.

Besonders bedeutend ist dies für Flüssigkeitsgefäße mit nicht zylindrischen (Längs-) Querschnitten der Innengeometrie, wie sie z.B. bei Flüssigkeitsgefäßen mit einer konischen Innengeometrie oder einer anderen, komplexeren Innengeometrie auftreten. Für solche Flüssigkeitsgefäße ist die manuelle Änderung der entsprechenden Konfiguration des Analysegeräts bisher nur mit außerordentlich großem Aufwand möglich, aufgrund der im Allgemeinen sehr aufwändigen Ermittlung der Füllstände.

Es ist daher Aufgabe der Erfindung ein automatisiertes Verfahren zur Ermittlung von Füllständen einer Flüssigkeit in einem Flüssigkeitsgefäß zur Verfügung zu stellen und so zu ermöglichen, dass mit verringertem Aufwand auch neue oder unbekannte, bisher nicht für die Verwendung vorgesehene Flüssigkeitsgefäßtypen auf einem Analysegerät eingesetzt werden können, insbesondere auch Flüssigkeitsgefäßtypen mit nicht zylindrischer Innengeometrie.

**Diese Aufgabe wird erfindungsgemäß durch die im Folgenden beschriebenen Gegenstände und Verfahren gelöst.**

Die Erfindung geht dabei von der Überlegung aus, dass durch Ermittlung von Füllständen und Pipettierung von definierten Volumina von Flüssigkeit in einem Flüssigkeitsgefäß eines Flüssigkeitsgefäßtyps mittels eines automatischen Analysegeräts die zu erwartenden Füllstände automatisiert ermittelt werden können.

Gegenstand der vorliegenden Erfindung ist ein Verfahren zur Ermittlung von Füllständen einer Flüssigkeit in einem Flüssigkeitsgefäß eines Flüssigkeitsgefäßtyps in Abhängigkeit von Volumina der Flüssigkeit in dem Flüssigkeitsgefäß mittels eines automatischen Analysegeräts, das Verfahren aufweisend die folgenden Schritte:
a) Ermittlung eines ersten Füllstandes der Flüssigkeit in dem Flüssigkeitsgefäß,
b) Pipettieren eines ersten Volumens der Flüssigkeit in das Flüssigkeitsgefäß oder aus dem Flüssigkeitsgefäß mittels einer Pipettiervorrichtung,
c) Ermittlung eines zweiten Füllstandes der Flüssigkeit in dem Flüssigkeitsgefäß,
d) Abspeichern der in Schritt a) und Schritt c) ermittelten Füllstände und der Volumina auf einem computerlesbaren Medium und Zuordnung der Füllstände und der Volumina zu dem Flüssigkeitsgefäßtyp des Flüssigkeitsgefäßes.

Dies hat den Vorteil, dass der erwartete Füllstand einer Flüssigkeit in einem Flüssigkeitsgefäß für einen bestimmten, neuen oder bisher unbekannten Flüssigkeitsgefäßtyp automatisiert ermittelt werden kann und dieser Flüssigkeitsgefäßtyp dann entsprechend auch auf einem automatischen Analysegerät verwendet werden kann, für welches die Verwendung des Flüssigkeitsgefäßtyps bisher nicht vorgesehen war.

In einer bevorzugten Ausführung umfasst das erfindungsgemäße Verfahren weiter die folgenden Schritte:
e) Ermittlung der Änderung des Füllstandes der Flüssigkeit durch die in Schritt b) durchgeführte Pipettierung mittels des ersten und des zweiten Füllstandes der Flüssigkeit,
f) Zuordnung einer sich durch das Pipettieren des ersten Volumens ergebenen Änderung des Volumens der Flüssigkeit in dem Flüssigkeitsgefäß zu der Änderung des Füllstandes in dem Flüssigkeitsgefäß.

In einer weiteren bevorzugten Ausführung des Verfahrens befindet sich in Schritt a) keine Flüssigkeit im Flüssigkeitsgefäß und wobei in Schritt b) Flüssigkeit in das Flüssigkeitsgefäß pipettiert wird. Dies hat den Vorteil, dass das Verfahren mit einem leeren Flüssigkeitsgefäß begonnen werden kann.

In einer weiteren bevorzugten Ausführung des Verfahrens befindet sich in Schritt a) ein vordefiniertes erstes Volumen der Flüssigkeit im Flüssigkeitsgefäß. Dies hat den Vorteil, dass das Verfahren mit einem bereits ganz oder teilweise gefüllten Flüssigkeitsgefäß begonnen werden kann. Vorteilhafterweise wird in Schritt a) des Verfahrens Flüssigkeit aus dem Flüssigkeitsgefäß heraus pipettiert. Dies ist besonders dann vorteilhaft, wenn mit einem ganz oder teilweise gefüllten Flüssigkeitsgefäß begonnen wurde.

In einer weiteren bevorzugten Ausführung des Verfahrens wird der erste und/oder zweite Füllstand mittels der Pipettiervorrichtung durch eine kapazitive Messung, eine resistive Messung und/oder eine optische Messung bestimmt. Dies hat den Vorteil, dass eine besonders einfache und präzise Messung der Füllstände erfolgen kann.

In einer weiteren bevorzugten Ausführung des Verfahrens werden die Verfahrensschritte a) bis c) iterativ wiederholt und eine Vielzahl von Füllständen, bevorzugt 3 bis 100, besonders bevorzugt 10 bis 40 Füllstände werden ermittelt, und in Verfahrensschritt d) abgespeichert und zugeordnet. Dies hat den Vorteil, dass eine größere Anzahl von Füllständen ermittelt werden kann und somit Eintauchtiefen präziser ermittelt werden können.

In einer weiteren bevorzugten Ausführung des Verfahrens umfasst das Verfahren weiter die folgenden Schritte:
g) Ermittlung eine Vielzahl von Änderungen des Füllstandes der Flüssigkeit durch die jeweils durchgeführten Pipettierungen mittels der Vielzahl von jeweils ermittelten Füllständen der Flüssigkeit,
h) Zuordnung der sich durch das Pipettieren der Flüssigkeit jeweils ergebenden Änderung des Volumens der Flüssigkeit in dem Flüssigkeitsgefäß zu der jeweils entsprechenden Änderung des Füllstandes in dem Flüssigkeitsgefäß.

In einer weiteren bevorzugten Ausführung des Verfahrens wird das Verfahren an einer Vielzahl von Flüssigkeitsgefäßen des gleichen Flüssigkeitsgefäßtyps durchgeführt und wobei die Ergebnisse bezüglich der ermittelten Füllstände der einzelnen Flüssigkeitsgefäße gemittelt werden. Dies hat den Vorteil, dass eine höhere Genauigkeit bezüglich der ermittelten Füllstände erreicht werden kann und über eventuell auftretende Schwankungen in den Eigenschaften einzelner Flüssigkeitsgefäße entsprechend gemittelt werden kann.

In einer weiteren bevorzugten Ausführung des Verfahrens umfasst das Abspeichern der Füllstände und die Zuordnung der Füllstände und der Volumina zu dem Flüssigkeitsgefäßtyp des Flüssigkeitsgefäßes die folgenden Schritte:
i) Erstellen einer Tabelle mit Wertepaaren jeweils bestehend aus einem erstem Wert der einem Volumen der Flüssigkeit in dem Flüssigkeitsgefäß entspricht und einem zweiten Wert, der dem ermittelten Füllstand des Gefäßes entspricht, wenn sich das dem ersten Wert entsprechende Volumen der Flüssigkeit in dem Flüssigkeitsgefäß befindet,
j) Abspeichern der unter i) erstellten Tabelle auf einem computerlesbaren Medium.

Dies hat den Vorteil, dass die für die Verwendung von neuen Flüssigkeitsgefäßtypen notwendige Information in besonders einfacher und kompakter Weise in dem automatischen Analysegerät repräsentiert werden kann und/oder an das automatische Analysegerät übertragen werden kann.

Ein weiterer Gegenstand der Erfindung ist ein Verfahren zur Ermittlung einer optimierten Eintauchtiefe einer Pipettiernadel in eine Flüssigkeit in einem Flüssigkeitsgefäß eines Flüssigkeitsgefäßtyps zum pipettieren eines vorgegebenen Volumens an Flüssigkeit aus dem Flüssigkeitsgefäß, umfassend die Schritte:
k) Ausführung eines erfindungsgemäßen Verfahrens zur Ermittlung von Füllständen einer Flüssigkeit in einem Flüssigkeitsgefäß eines Flüssigkeitsgefäßtyps in Abhängigkeit von Volumina der Flüssigkeit in dem Flüssigkeitsgefäß mittels eines automatischen Analysegeräts,
1) Ermittlung des Füllstandes der Flüssigkeit in dem Flüssigkeitsgefäß des Flüssigkeitsgefäßtyps,
m) Ermittlung des voraussichtlichen Füllstandes nach Entnahme eines vorgegebenen Volumens der Flüssigkeit aus dem Flüssigkeitsgefäß anhand der Tabelle von Wertepaaren aus Schritt k),
n) Eintauchen der Pipettiernadel in die Flüssigkeit bis sich eine Öffnung der Pipettiernadel an der Pipettiernadelspitze in Höhe des voraussichtlichen Füllstandes aus m) befindet,
o) Entnahme des vorgegebenen Volumens der Flüssigkeit aus dem Flüssigkeitsgefäß mittels der Pipettiernadel.

Ein weiterer Gegenstand der Erfindung ist ein automatisches Analysegerät umfassend eine Pipettiervorrichtung, eine Halterung für ein Flüssigkeitsgefäß und ein Steuergerät, wobei mittels einer mit der Pipettiervorrichtung durchführbaren kapazitiven Messung ein Füllstand einer Flüssigkeit in einem Flüssigkeitsgefäß bestimmt werden kann, das sich in der Halterung befindet, und wobei das Steuergerät ein computerlesbares Medium umfasst und zur Ausführung eines erfindungsgemäßen Verfahrens ausgelegt ist. Vorteilhafterweise ist das Steuergerät zur Ausführung eines erfindungsgemäßen Verfahrens konfiguriert.

In bevorzugter Ausführung ist das Analysegerät zur Analyse von biologischen Proben, bevorzugt Blutproben, ausgelegt.

Ein weiterer Gegenstand der Erfindung ist die Verwendung eines erfindungsgemäßen Verfahrens in einem automatischen Analysegerät.

In weiterer vorteilhafter Ausgestaltung umfasst das Analysegerät eine Messeinrichtung mit einem Photometer, die eine photometrische Untersuchung einer Probe ermöglicht.

Der Begriff "photometrische Untersuchung", wie vorliegend verwendet, bezieht sich auf Absorptions-, Reflektions-, Beugungs-, Fluoreszenz-, Phosphoreszenz-, Chemilumineszenz- und/oder Streuungsmessungen mit elektromagnetischen Wellen. Hier ist zunächst an elektromagnetische Wellen des sichtbaren Spektrums gedacht (zwischen etwa 350 nm und etwa 750 nm Wellenlänge), jedoch auch an Wellen im Infrarot- (IR-) Bereich (zwischen etwa 750 nm und etwa 1 mm Wellenlänge) und im Ultraviolett- (UV-) Bereich (zwischen etwa 350 nm und etwa 50 nm Wellenlänge).

Ein automatisches Analysegerät umfasst in bevorzugter Ausführung eine Vielzahl von Gerätebaugruppen. Bei den Gerätebaugruppen handelt es sich z.B. um eine beispielsweise scheibenförmige Transport- und Lagereinrichtung für Probengefäße, eine beispielsweise scheibenförmige Transport- und Lagereinrichtung für Reagenzbehälter, einen Inkubationsblock, ein Photometer oder eine andere Baugruppe des automatischen Analysegeräts, die zum Prozessieren von Proben benötigt wird.

Unter einer "Probe" ist im Sinne der Erfindung das Material zu verstehen, dass die nachzuweisende Substanz (den Analyten) vermutlich enthält. Der Begriff "Probe" umfasst insbesondere biologische Flüssigkeiten von Menschen oder Tieren wie z.B. Blut, Plasma, Serum, Sputum, Exsudat, bronchoalveoläre Lavage, Lymphflüssigkeit, Synovialflüssigkeit, Samenflüssigkeit, Vaginalschleim, Feces, Urin, Liquor, aber auch z.B. durch Homogenisation oder Zelllyse für die photometrische, bevorzugt nephelometrische Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Bei einem quantitativen Nachweis wird die Menge, die Konzentration oder die Aktivität des Analyten in der Probe gemessen. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

**Die Erfindung wird anhand von Zeichnungen exemplarisch näher erläutert. Darin zeigen:**
FIG. 1 ein erfindungsgemäßes automatisches Analysegerät (3),
FIG. 2 und 3 jeweils eine schematische Darstellung eines erfindungsgemäßen Verfahrens.

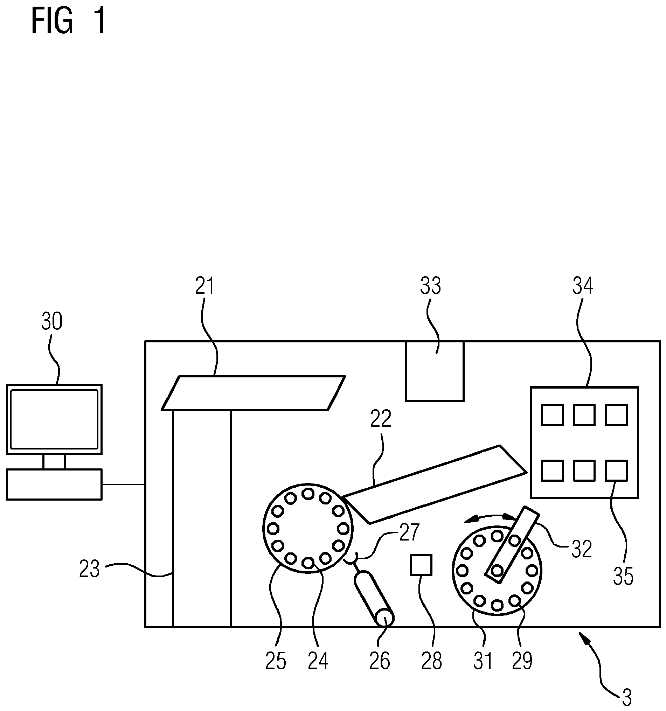

FIG. 1 zeigt eine schematische Darstellung eines automatischen Analysegeräts (3) mit einigen darin enthaltenen Bauteilen. Hierbei werden nur die wichtigsten Bauteile stark vereinfacht dargestellt, um die grundsätzliche Funktion des automatischen Analysegeräts (3) zu erläutern, ohne hierbei detailliert die einzelnen Teile jedes Bauteils darzustellen.

Das automatische Analysegerät (3) ist dafür ausgebildet, vollautomatisch verschiedenste Analysen von Blut oder anderen Körperflüssigkeiten durchzuführen, ohne dass hierfür Aktivitäten eines Benutzers notwendig wären. Notwendige Eingriffe eines Benutzers beschränken sich vielmehr auf Wartung oder Reparatur und Nachfüllarbeiten, wenn z.B. Küvetten nachgefüllt oder Flüssigkeitsbehälter ausgetauscht werden müssen.

Die Patientenproben werden dem automatischen Analysegerät (3) in Primärprobengefäßen auf nicht näher dargestellten Schlitten über eine Zuführungsschiene (23) zugeführt. Informationen hinsichtlich der pro Probe durchzuführenden Analysen können beispielsweise mittels auf den Probengefäßen angebrachten Strichcodes übergeben werden, die in dem automatischen Analysegerät (3) ausgelesen werden. Aus den Probengefäßen werden mit Hilfe eines ersten Pipettiersystems (21) Probenaliquots mittels einer Pipettiernadel entnommen.

Die Probenaliquots werden ebenfalls nicht näher dargestellten Küvetten zugeführt, die in Aufnahmepositionen (24) einer drehbaren, auf 37 °C temperierten Inkubationseinrichtung (25) angeordnet sind. Die Küvetten werden aus einem Küvettenvorratsbehälter (33) entnommen, in dem die Küvetten ungeordnet als Schüttgut vorliegen. Erst bei der Entnahme einer einzelnen Küvette und der Platzierung der Küvette in eine Aufnahmeposition (24) wird für diese Küvette ein Datensatz erstellt, der zunächst die Information, dass es sich um eine Küvette handelt und in welcher Aufnahmeposition (24) sie platziert ist, enthält. In dem auf ca. 8-10 °C gekühlten Reagenzgefäßvorratsbehälter (34) werden Reagenzgefäße (35) mit verschiedenen Reagenzflüssigkeiten aufbewahrt. Reagenzflüssigkeit wird mittels der Pipettiernadel eines zweiten Pipettiersystems (22) aus einem Reagenzgefäß (34) entnommen und zur Bereitstellung eines Reaktionsansatzes in eine Küvette, die bereits ein Probenaliquot enthält, abgegeben. Die Küvette mit dem Reaktionsansatz wird von dem Transferarm (26) mit einem Greifer (27) aus einer Aufnahmeposition (24) der Inkubationseinrichtung (25) entnommen und zum Durchmischen des Reaktionsansatzes zu einer Schütteleinrichtung (28) transferiert. Nach Beendigung des Mischvorgangs wird die Küvette weiter in eine Aufnahmeposition (29) der Aufnahmevorrichtung (31) für eine Messeinrichtung, die ein Photometer (32) zur photometrischen Untersuchung der Probe umfasst, transportiert, wo die Extinktion des Reaktionsansatzes gemessen wird. Das Photometer (32) ist dabei in mindestens eine der beiden Richtungen der dargestellten Pfeile um eine Achse, die mittig bezüglich der Aufnahmevorrichtung (31) angeordnet ist, drehbar oder bevorzugt rotierbar ausgestaltet.

Der gesamte Prozess wird von einer Steuereinheit (30), wie z.B. von einem über eine Datenleitung angeschlossenen Rechner gesteuert, unterstützt durch eine Vielzahl weiterer, nicht näher dargestellter elektronischer Schaltungen und Mikroprozessoren innerhalb des automatischen Analysegeräts (3) und seiner Bauteile. Die Steuereinheit (30) umfasst dabei ein Steuergerät, kann jedoch in weiteren Ausführungen auch zwei oder mehr Steuergeräte umfassen.

Das Steuergerät umfasst bevorzugt ein computerlesbares Medium und ist zur Ausführung eines erfindungsgemäßen Verfahrens ausgelegt und/oder entsprechend konfiguriert.

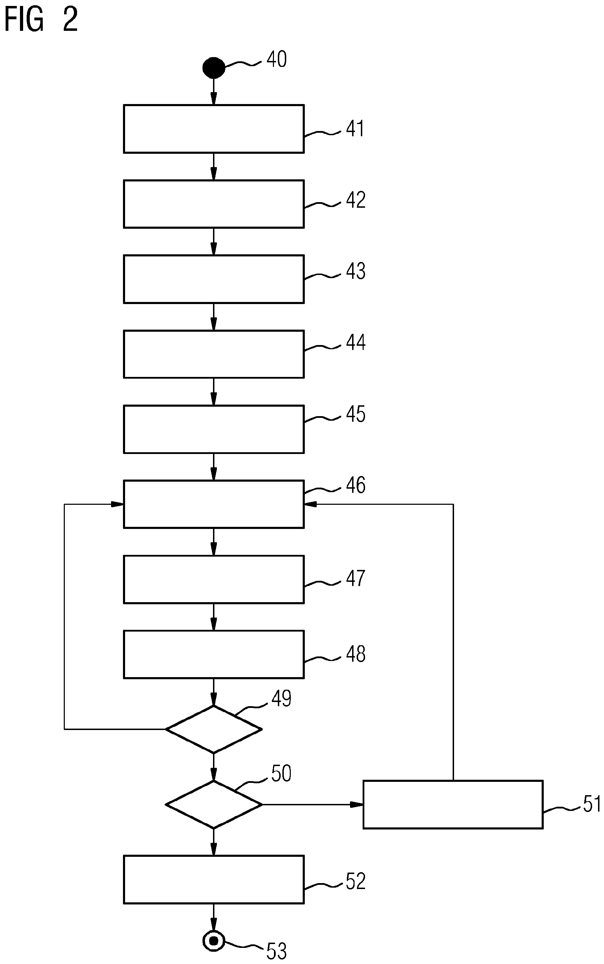

In FIG. 2 ist schematisch der Ablauf eines erfindungsgemäßen Verfahrens dargestellt, bei dem Flüssigkeit mittels eines automatischen Analysegeräts aus dem Flüssigkeitsgefäß heraus pipettiert wird. Ein entsprechend konfiguriertes Steuergerät umfassend ein computerlesbares Medium steuert die Abarbeitung des Verfahrens durch ein automatisches Analysegerät.

Nach Start des Verfahrens (40) wird ein Rack mit einem oder mehreren leeren Flüssigkeitsgefäßen eines Flüssigkeitsgefäßtyps bestückt (41). In jedes der Flüssigkeitsgefäße wird ein erstes Volumen einer Flüssigkeit gefüllt (42). Das erste Volumen, ein erster Füllstand (Mess-Startpunkt) und ein letzter Füllstand (Mess-Endpunkt) werden an das automatische Analysegerät übergeben (43), z.B. durch eine Benutzereingabe. Der Mess-Endpunkt ist dabei beispielsweise der tiefste Punkt in dem Flüssigkeitsgefäß, der noch für die Entnahme von Probenflüssigkeit geeignet ist. Der Mess-Endpunkt kann z.B. auch mittels einer Vorrichtung, die die Annäherung oder Berührung der Pipettiervorrichtung des automatischen Analysegeräts an einen Gegenstand ermitteln kann (z.B. Crash-Sensor), bestimmt werden. Das Rack mit den Flüssigkeitsgefäßen wird dann dem automatischen Analysegerät zugeführt (44) und mit der Abarbeitung des ersten Flüssigkeitsgefäßes begonnen (45).

Mittels der Pipettiervorrichtung wird ein zweites Volumen, z.B. 50 oder 100 Micro-Liter aus dem ersten Flüssigkeitsgefäß entnommen (46) und in die Waschstation abgegeben (47). Anschließend wird der Füllstand der Flüssigkeit gemessen (48). Es erfolgt eine Prüfung, ob der Mess-Endpunkt erreicht ist (49). Falls der Mess-Endpunkt nicht erreicht ist, werden die Schritte (46), (47) und (48) wiederholt. Falls der Mess-Endpunkt erreicht ist, erfolgt eine Prüfung, ob sich noch weitere Flüssigkeitsgefäße auf dem Rack befinden (50). Falls sich noch ein weiteres Flüssigkeitsgefäß auf dem Rack befindet, wird mit der Abarbeitung des nächsten Flüssigkeitsgefäßes auf dem Rack begonnen (51) und die Schritte (46) bis (50) werden erneut, ggf. mehrfach, abgearbeitet. Falls sich kein weiteres Flüssigkeitsgefäß auf dem Rack befindet, erfolgt ggf. eine Mittelung der gemessenen Datenpunkte bezüglich der verschiedenen Flüssigkeitsgefäße des Flüssigkeitsgefäßtyps und es wird eine Tabelle mit Wertepaaren jeweils bestehend aus einem erstem Wert der einem Volumen der Flüssigkeit in dem Flüssigkeitsgefäß entspricht und einem zweiten Wert, der dem ermittelten Füllstand des Gefäßes entspricht, wenn sich das dem ersten Wert entsprechende Volumen der Flüssigkeit in dem Flüssigkeitsgefäß befindet erstellt und abgespeichert (52). Damit ist das Verfahren komplett abgearbeitet und stoppt (53).

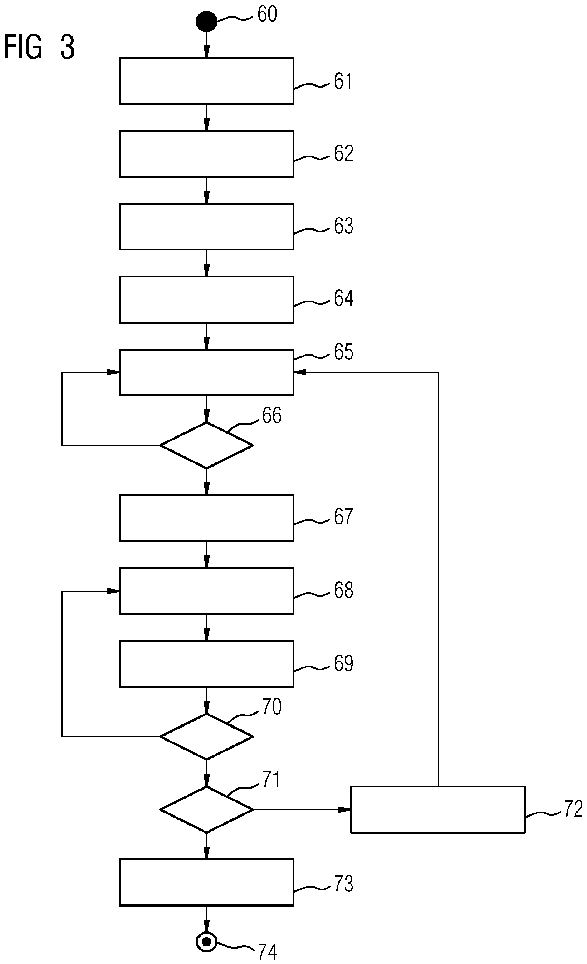

In FIG. 3 ist schematisch der Ablauf eines erfindungsgemäßen Verfahrens dargestellt, bei dem Flüssigkeit mittels eines automatischen Analysegeräts in das Flüssigkeitsgefäß herein pipettiert wird. Ein entsprechend konfiguriertes Steuergerät umfassend ein computerlesbares Medium steuert die Abarbeitung des Verfahrens durch ein automatisches Analysegerät.

Nach Start des Verfahrens (60) wird ein Rack mit einem oder mehreren leeren Flüssigkeitsgefäßen eines Flüssigkeitsgefäßtyps bestückt (61). Das erste Volumen (leer), ein erster Füllstand (Mess-Startpunkt) und ein letzter Füllstand (Mess-Endpunkt) werden an das automatische Analysegerät übergeben (62), z.B. durch eine Benutzereingabe. Der Mess-Startpunkt ist dabei beispielsweise der tiefste Punkt in dem Flüssigkeitsgefäß, der noch für die Entnahme von Probenflüssigkeit geeignet ist.

Der Mess-Startpunkt kann z.B. auch mittels einer Vorrichtung, die die Annäherung oder Berührung der Pipettiervorrichtung des automatischen Analysegeräts an einen Gegenstand ermitteln kann (z.B. Crash-Sensor), bestimmt werden. Das Rack mit den Flüssigkeitsgefäßen wird dann dem automatischen Analysegerät zugeführt (63) und mit der Abarbeitung des ersten Flüssigkeitsgefäßes begonnen (64).

Mittels der Pipettiervorrichtung wird ein zweites Volumen der Flüssigkeit, z.B. 50 oder 100 Micro-Liter in das erste Flüssigkeitsgefäß hinein pipettiert (65). Anschließend erfolgt eine Prüfung, ob der Füllstand der Flüssigkeit gemessen werden kann, oder der Flüssigkeitsfüllstand unterhalb des messbaren Flüssigkeitsmessstandes befindet (66). Falls sich der Flüssigkeitsfüllstand unterhalb des messbaren Flüssigkeitsmessstandes befindet, wird erneut ein zweites Volumen der Flüssigkeit in das erste Flüssigkeitsgefäß hinein pipettiert (65). Falls sich der Flüssigkeitsfüllstand nicht unterhalb des messbaren Flüssigkeitsmessstandes befindet und daher messbar ist, wird das Restvolumen aus den in Schritt (65) erfolgten Hinzufügungen von Flüssigkeit berechnet und abgespeichert (67).

Anschließend wird ein zweites Volumen der Flüssigkeit, z.B. 50 oder 100 Micro-Liter in das erste Flüssigkeitsgefäß hinein pipettiert (68) und der Füllstand der Flüssigkeit gemessen (69).

Es erfolgt eine Prüfung, ob der Mess-Endpunkt erreicht ist (70). Falls der Mess-Endpunkt nicht erreicht ist, werden die Schritte (68), (69) und (70) wiederholt. Falls der Mess-Endpunkt erreicht ist, erfolgt eine Prüfung, ob sich noch weitere Flüssigkeitsgefäße auf dem Rack befinden (71).

Falls sich noch ein weiteres Flüssigkeitsgefäß auf dem Rack befindet, wird mit der Abarbeitung des nächsten Flüssigkeitsgefäßes auf dem Rack begonnen (72) und die Schritte (65) bis (71) werden erneut, ggf. mehrfach, abgearbeitet. Falls sich kein weiteres Flüssigkeitsgefäß auf dem Rack befindet, erfolgt ggf. eine Mittelung der gemessenen Datenpunkte bezüglich der verschiedenen Flüssigkeitsgefäße des Flüssigkeitsgefäßtyps und es wird eine Tabelle mit Wertepaaren jeweils bestehend aus einem erstem Wert der einem Volumen der Flüssigkeit in dem Flüssigkeitsgefäß entspricht und einem zweiten Wert, der dem ermittelten Füllstand des Gefäßes entspricht, wenn sich das dem ersten Wert entsprechende Volumen der Flüssigkeit in dem Flüssigkeitsgefäß befindet erstellt und abgespeichert (73). Damit ist das Verfahren komplett abgearbeitet und stoppt (74).

## Patentansprüche

1. Verfahren zur Ermittlung von Füllständen einer Flüssigkeit in einem Flüssigkeitsgefäß eines Flüssigkeitsgefäßtyps in Abhängigkeit von Volumina der Flüssigkeit in dem Flüssigkeitsgefäß mittels eines automatischen Analysegeräts, das Verfahren aufweisend die folgenden Schritte:
a) Ermittlung eines ersten Füllstandes der Flüssigkeit in dem Flüssigkeitsgefäß,
b) Pipettieren eines ersten Volumens der Flüssigkeit in das Flüssigkeitsgefäß oder aus dem Flüssigkeitsgefäß mittels einer Pipettiervorrichtung,
c) Ermittlung eines zweiten Füllstandes der Flüssigkeit in dem Flüssigkeitsgefäß,
d) Abspeichern der in Schritt a) und Schritt c) ermittelten Füllstände und der Volumina auf einem computerlesbaren Medium und Zuordnung der Füllstände und der Volumina zu dem Flüssigkeitsgefäßtyp des Flüssigkeitsgefäßes.

2. Verfahren nach Anspruch 1 weiter umfassend die folgenden Schritte:
e) Ermittlung der Änderung des Füllstandes der Flüssigkeit durch die in Schritt b) durchgeführte Pipettierung mittels des ersten und des zweiten Füllstandes der Flüssigkeit,
f) Zuordnung einer sich durch das Pipettieren des ersten Volumens ergebenen Änderung des Volumens der Flüssigkeit in dem Flüssigkeitsgefäß zu der Änderung des Füllstandes in dem Flüssigkeitsgefäß.

3. Verfahren nach einem der vorhergehenden Ansprüche, wobei sich in Schritt a) keine Flüssigkeit im Flüssigkeitsgefäß befindet und wobei in Schritt b) Flüssigkeit in das Flüssigkeitsgefäß pipettiert wird.

4. Verfahren nach Anspruch 1, wobei sich in Schritt a) ein vordefiniertes erstes Volumen der Flüssigkeit im Flüssigkeitsgefäß befindet.

5. Verfahren nach Anspruch 4, wobei in Schritt a) Flüssigkeit aus dem Flüssigkeitsgefäß heraus pipettiert wird.

6. Verfahren nach einem der Ansprüche 1 bis 5, wobei der erste und/oder zweite Füllstand mittels der Pipettiervorrichtung durch eine kapazitive Messung, eine resistive Messung und/oder eine optische Messung bestimmt wird.

7. Verfahren nach einem der vorhergehenden Ansprüche, wobei die Verfahrensschritte a) bis c) iterativ wiederholt werden und eine Vielzahl von Füllständen, bevorzugt 3 bis 100, besonders bevorzugt 10 bis 40 Füllstände ermittelt werden, und in Verfahrensschritt d) abgespeichert und zugeordnet werden.

8. Verfahren nach Anspruch 7, das Verfahren aufweisend weiter die folgenden Schritte:
g) Ermittlung eine Vielzahl von Änderungen des Füllstandes der Flüssigkeit durch die jeweils durchgeführten Pipettierungen mittels der Vielzahl von jeweils ermittelten Füllständen der Flüssigkeit,
h) Zuordnung der sich durch das Pipettieren der Flüssigkeit jeweils ergebenden Änderung des Volumens der Flüssigkeit in dem Flüssigkeitsgefäß zu der jeweils entsprechenden Änderung des Füllstandes in dem Flüssigkeitsgefäß.

9. Verfahren nach einem der Ansprüche 1 bis 8, wobei das Verfahren an einer Vielzahl von Flüssigkeitsgefäßen des gleichen Flüssigkeitsgefäßtyps durchgeführt wird und wobei die Ergebnisse bezüglich der ermittelten Füllstände der einzelnen Flüssigkeitsgefäße gemittelt werden.

10. Verfahren nach einem der vorhergehenden Ansprüche, wobei das Abspeichern der Füllstände und die Zuordnung der Füllstände und der Volumina zu dem Flüssigkeitsgefäßtyp des Flüssigkeitsgefäßes die folgenden Schritte umfasst:
i) Erstellen einer Tabelle mit Wertepaaren jeweils bestehend aus einem erstem Wert der einem Volumen der Flüssigkeit in dem Flüssigkeitsgefäß entspricht und einem zweiten Wert, der dem ermittelten Füllstand des Gefäßes entspricht, wenn sich das dem ersten Wert entsprechende Volumen der Flüssigkeit in dem Flüssigkeitsgefäß befindet,
j) Abspeichern der unter i) erstellten Tabelle auf einem computerlesbaren Medium.

11. Verfahren zur Ermittlung einer optimierten Eintauchtiefe einer Pipettiernadel in eine Flüssigkeit in einem Flüssigkeitsgefäß eines Flüssigkeitsgefäßtyps zum pipettieren eines vorgegebenen Volumens an Flüssigkeit aus dem Flüssigkeitsgefäß, umfassend die Schritte:
k) Ausführung eines Verfahrens nach Anspruch 10,
1) Ermittlung des Füllstandes der Flüssigkeit in dem Flüssigkeitsgefäß des Flüssigkeitsgefäßtyps,
m) Ermittlung des voraussichtlichen Füllstandes nach Entnahme eines vorgegebenen Volumens der Flüssigkeit aus dem Flüssigkeitsgefäß anhand der Tabelle von Wertepaaren aus Schritt k),
n) Eintauchen der Pipettiernadel in die Flüssigkeit bis sich eine Öffnung der Pipettiernadel an der Pipettiernadelspitze in Höhe des voraussichtlichen Füllstandes aus m) befindet,
o) Entnahme des vorgegebenen Volumens der Flüssigkeit aus dem Flüssigkeitsgefäß mittels der Pipettiernadel.

12. Automatisches Analysegerät umfassend eine Pipettiervorrichtung, eine Halterung für ein Flüssigkeitsgefäß und ein Steuergerät, wobei mittels einer mit der Pipettiervorrichtung durchführbaren kapazitiven Messung ein Füllstand einer Flüssigkeit in einem Flüssigkeitsgefäß bestimmt werden kann, das sich in der Halterung befindet, und wobei das Steuergerät ein computerlesbares Medium umfasst und zur Ausführung eines Verfahrens nach einem der Ansprüche 1 bis 11 ausgelegt ist.

13. Automatisches Analysegerät nach Anspruch 12, wobei das Analysegerät zur Analyse von biologischen Proben, bevorzugt Blutproben, ausgelegt ist.

14. Verwendung eines Verfahrens nach einem der Ansprüche 1 bis 11 in einem automatischen Analysegerät.
